# DEMANDE DE BREVET EUROPEEN

(11) **EP 0 838 540 A1**
(43) Date de publication de la demande: **29.04.1998**
(21) Numéro de dépôt: 97420193.1
(22) Date de dépôt: 17.10.1997
(51) Int. Cl.: C25C 3/06, C25C 3/22

(54) **Procédé de changement d'anodes usées de cuves d'électrolyse de l'aluminium et dispositif de captage des effluents gazeux permettant de le mettre en oeuvre**

(30) Priorité: 23.10.1996 FR 9613145
(71) Demandeur: ALUMINIUM PECHINEY, 92400 Courbevoie (FR)
(72) Inventeur: Bouzat, Gilbert, 84500 Bollène (FR); Personnet, Pierre, 73300 Saint Jean de Maurienne (FR)
(74) Mandataire: Mougeot, Jean-Claude

(57) **Abrégé**

La présente invention a pour objet principal un procédé de changement d'anodes usées caractérisé en ce que la plus grande partie des produits gazeux émis par les anodes usées et par les croûtes de bain retirées des cuves d'électrolyse est récupérée pendant la phase de refroidissement à l'aide d'un dispositif de captage des effluents propre aux cuves d'électrolyse.

La présente demande a aussi pour objet un dispositif de captage des effluents gazeux de cuves de production d'aluminium par électrolyse ignée qui permette la récupération des produits gazeux émis par les anodes usées, et par les croûtes qu'elles contiennent, lors du remplacement et du refroidissement de ces anodes et de ces croûtes.

Le dispositif selon l'invention comprend de préférence un caisson de dégazage et de refroidissement (2), situé de préférence à l'une des extrémités du dispositif de capotage (3) des cuves. Le caisson (2) peut être mis en communication avec les moyens d'aspiration du dispositif de captage (1).

## Description

### Domaine de l'invention

La présente invention concerne le contrôle des effluents gazeux produits par les procédés de production de l'aluminium par électrolyse ignée. Elle concerne tout particulièrement le captage des produits gazeux nocifs, notamment des produits fluorés, dégagés par les anodes usées et par les croûtes de bain après avoir été retirées des cuves d'électrolyse.

### Etat de la technique et problème posé

L'aluminium métal est produit industriellement par électrolyse ignée, à savoir par électrolyse de l'alumine dans un bain de cryolithe fondue selon le procédé bien connu de Hall-Héroult. Or, la réaction d'électrolyse, les réactions secondaires et les hautes températures d'opération entraînent la production d'effluents gazeux, qui contiennent surtout du monoxyde et du dioxyde de carbone et des produits fluorés.

Le rejet de ces effluents dans l'atmosphère est sévèrement contrôlé et réglementé, non seulement en ce qui concerne l'atmosphère ambiante de la salle d'électrolyse, pour des raisons de sécurité du personnel opérant à proximité des cuves, mais également en ce qui concerne la pollution atmosphérique. Les réglementations de plusieurs Etats en matière de pollution imposent des limites aux quantités d'effluents rejetées dans l'atmosphère.

Il existe aujourd'hui des solutions qui permettent d'extraire, de récupérer et de traiter ces effluents de manière fiable et satisfaisante. Une solution largement répandue consiste à munir les cuves d'électrolyse d'un dispositif de captage des effluents. Ce dispositif couvre les cuves d'électrolyse et comprend un dispositif de capotage et des moyens d'aspiration et de traitement chimique des effluents. Les procédés connus de traitement des effluents incluent notamment la récupération des gaz fluorés par réaction avec de l'alumine. Le dispositif de capotage comprend des moyens d'accès, tels que des capots et une porte de coulée, qui permettent d'intervenir sur la cuve. La porte de coulée, généralement située à l'une des extrémités de la cuve, du côté de l'allée de circulation, permet d'extraire aisément une partie de l'aluminium liquide produit en cours d'électrolyse.

Le dispositif de capotage délimite une zone d'aspiration confinée et en dépression par rapport à l'atmosphère ambiante, ce qui permet de récupérer efficacement les effluents. On obtient ainsi des rendements de captage en régime continu qui atteignent 99 % dans les installations industrielles les plus modernes, de sorte que les taux d'émission atmosphérique de produits gazeux fluorés sont nettement inférieurs aux seuils réglementaires.

Or, les réglementations en matière de pollution sont en constante évolution et la tendance est à une sévérité toujours croissante des normes en vigueur. En particulier, dans certains pays producteurs d'aluminium, les rejets de produits fluorés, qui sont actuellement le plus souvent limités à moins de 1 kg F (fluor total) par tonne d'aluminium produit (F/tonne A1), sont appelés dans certains Etats à être limités à moins de 0,5 kg F/tonne A1 dans un avenir rapproché. La demanderesse a donc recherché des solutions qui permettent de réduire davantage les rejets atmosphériques des usines de production d'aluminium par électrolyse ignée, de manière notamment à respecter les normes les plus sévères, mais qui soient satisfaisantes sur le plan des coûts de production.

Dans cette recherche, la demanderesse est partie du constat que les procédés connus de production d'aluminium par électrolyse ignée, qui fonctionnent essentiellement en régime continu, comprennent néanmoins des interventions ponctuelles sur les cuves d'électrolyse qui nécessitent l'ouverture du dispositif de capotage, rompant ainsi le confinement de la zone d'aspiration. C'est le cas notamment des opérations de changement des anodes usées.

Selon les procédés connus, les opérations de changement d'anodes usées comprennent l'ouverture de capots amovibles donnant accès individuellement aux anodes à changer et l'enlèvement de ces anodes des cuves d'électrolyse, et donc de la zone d'aspiration du dispositif de capotage de ces cuves. Des croûtes sont aussi retirées des cuves lors des changements d'anodes, soit qu'elles sont emportées par les anodes usées retirées des cuves, soit qu'elles sont volontairement retirées de manière à faciliter entre autres le positionnement des anodes de remplacement. Les anodes et les croûtes de bain ainsi retirées des cuves sont très chaudes, soit à une température généralement supérieure à 800°C, et doivent par conséquent subir une phase de refroidissement jusqu'à la température ambiante. En règle générale. les anodes et les croûtes de bain sont ensuite traitées de manière à récupérer les matériaux constitutifs, le plus souvent lorsqu'elles ont atteint une température proche de l'ambiante.

Or, les anodes usées et les croûtes de bain qui sont retirées des cuves d'électrolyse lors des changements d'anode émettent des quantités significatives de produits gazeux durant la phase de refroidissement. Ces produits gazeux sont constitués en grande partie de produits fluorés. Le taux d'émission en produits gazeux est initialement très élevé et décroît ensuite rapidement dans l'heure qui suit l'enlèvement des cuves d'électrolyse, notamment sous l'effet de la diminution de la température. Les taux d'émission en produits fluorés sont typiquement de l'ordre de 10 à 100 g F par minute uniquement pour les anodes usées.

Par conséquent, bien que les moyens d'aspiration soient en général conçus de telle manière que l'ouverture des capots nuise peu à l'efficacité de l'aspiration durant les opérations de changement d'anodes usées, l'enlèvement des anodes et des croûtes de la zone d'aspiration entraîne le rejet directement dans l'atmosphère des produits gazeux nocifs, notamment des produits fluorés, émis par celles-ci durant leur manutention et leur refroidissement.

La demanderesse a donc recherché des moyens qui permettent de réduire sensiblement la quantité de produits gazeux émis directement dans l'atmosphère ambiante, par les anodes usées et par les croûtes de bain retirées du bain d'électrolyse, lors des opérations de changement des anodes usées, et durant le refroidissement desdites anodes et croûtes.

On connaît cependant très peu moyens qui permettent d'atteindre les objectifs fixés de manière satisfaisante, notamment en termes de coûts d'investissement et de maîtrise des procédés, et tout particulièrement en ce qui concerne la limite de 0,5 kg F / tonne A1 pour les rejets de produits fluorés.

Par la demande allemande DE 42 21 882 A1, il a été proposé récemment de placer les anodes usées dans un dispositif de transport et d'entreposage. Ce dispositif consiste en un conteneur possédant un ou plusieurs compartiments munis de capots étanches et dans lesquels sont déposées les anodes usées. Après fermeture des capots, la pression interne du conteneur s'élève par échauffement de l'atmosphère interne et par accumulation des gaz émis par les anodes usées. Les gaz s'évacuent dans l'atmosphère ambiante par passage à travers des filtres qui permettent de piéger les gaz nocifs. Cette solution requiert cependant des moyens permettant d'obtenir une étanchéité suffisante du conteneur, qui est en surpression par rapport à la pression ambiante. et exige un contrôle sévère de cette étanchéité, ce qui entraîne une augmentation des coûts de production. De surcroît, la dimension des filtres, et corrélativement leur efficacité, est limitée par les dimensions du conteneur et par les surpressions admissibles dans le conteneur.

### Objet de l'invention

La présente invention a pour premier objet un procédé de changement d'anodes usées de cuves de production d'aluminium par électrolyse ignée qui permette d'améliorer la récupération des produits gazeux émis par les anodes usées et par les croûtes retirées du bain d'électrolyse, notamment lors des opérations de changement des anodes et lors du refroidissement des anodes et des croûtes, qui permette de réduire sensiblement les émissions atmosphériques desdits produits gazeux, de manière à atteindre notamment des rejets atmosphériques de produits fluorés nettement inférieurs à 0,5 kg F/tonne A1, et qui soit compatible avec les procédés et les dispositifs existants de production d'aluminium par électrolyse ignée.

La présente invention a également pour objet un dispositif de captage des effluents gazeux qui permette une mise en oeuvre du procédé selon l'invention de manière efficace et dans des conditions compatibles avec les procédés connus de production d'aluminium par électrolyse ignée.

### Description de l'invention

Lors de ses recherches, la demanderesse a constaté que les quantités de produits fluorés libérées lors des changements d'anodes et lors du refroidissement des anodes et des croûtes constituent une part importante des rejets atmosphériques observés dans les usines de production d'aluminium par électrolyse ignée, même s'ils n'entraînent pas un dépassement des normes actuelles. Ainsi, la présente invention exploite le constat qu'une réduction de ces émissions permet de réduire sensiblement la quantité totale de produits fluorés émis par tonne d'aluminium produit, aussi appelé "rejets spécifiques en fluorures totaux" et ci-après désigné simplement par l'expression "rejets spécifiques". En effet, comme le montrent les essais comparatifs décrits plus bas, les mesures de contrôle en usine mettent en évidence une augmentation significative des rejets gazeux lors des opérations de changement d'anodes.

La présente invention est aussi basée sur l'observation que, en dépit d'un taux d'émission initialement élevé, la plus grande partie de la quantité totale en produits gazeux émise par les anodes usées et les croûtes de bain était en fait libérée après les opérations de changement d'anode, et plus particulièrement lors de la phase de refroidissement.

Enfin, la demanderesse a également constaté que, de façon surprenante, moyennant certaines modifications accessoires du dispositif de capotage des cuves d'électrolyse, il était possible de réaliser la phase de refroidissement dans des conditions satisfaisantes tout en permettant simultanément la récupération d'une grande partie, voire de la plus grande partie, des produits gazeux émis par les anodes, et sans perturbation significative de la production d'aluminium.

Il a ainsi été trouvé que, dans certaines conditions, il était possible d'effectuer les opérations de changement d'anode, ainsi que la phase de refroidissement des anodes et des croûtes, de telle manière que la plus grande partie des produits gazeux émis par les anodes et les croûtes de bain puisse être récupérée, sans entraîner de perturbation significative, ni dans le déroulement des opérations principales de changement d'anode, ni dans la production d'aluminium. Le procédé de changement d'anode peut même être tel que les rejets observés durant les changements d'anode montrent un écart faible par rapport aux rejets observés en régime continu, c'est-à-dire durant les périodes entre les opérations de changement d'anode, périodes durant lesquelles le dispositif de capotage est normalement entièrement refermé.

Le procédé de changement d'anodes usées de cuves d'électrolyse selon l'invention est ainsi caractérisé en ce qu'une grande partie, et de préférence la plus grande partie, des produits gazeux fluorés émis par les anodes usées et par les croûtes de bain retirées des cuves d'électrolyse pendant la phase de refroidissement est récupérée à l'aide d'un dispositif de captage des effluents propre aux cuves d'électrolyse, de telle sorte que la part relative des rejets spécifiques attribuable aux opérations de changement d'anode est réduite de manière significative. Ladite plus grande partie est de préférence au moins égale à 50%, et de préférence encore au moins égale à 70%.

Dans le mode de réalisation préféré, le procédé selon l'invention comprend le stockage, pendant la période de refroidissement, des anodes usées ou des croûtes de bain, ou desdites anodes et croûtes simultanément, dans le dispositif de captage des effluents des cuves d'électrolyse de manière à permettre la récupération, à l'aide du dispositif de captage des effluents propre aux cuves, d'une grande partie, et de préférence de la plus grande partie, des produits gazeux émis lors de la phase de refroidissement.

Le dispositif de captage des effluents gazeux propre aux cuves d'électrolyse selon l'invention, qui comprend un dispositif de capotage de cuves de production d'aluminium par électrolyse ignée, des moyens d'aspiration et des moyens de traitement des effluents, est caractérisé en ce qu'il permet le stockage temporaire d'anodes usées et de croûtes de bain, de manière à ce que les produits gazeux émis par les anodes usées et/ou par les croûtes de bain soient récupérés efficacement à l'aide desdits moyens d'aspiration et traités à l'aide desdits moyens de traitement durant la période de refroidissement et de dégazage des anodes usées et/ou des croûtes.

De préférence, le dispositif de captage des effluents gazeux selon l'invention comprend aussi une zone de stockage, laquelle zone comprend des moyens d'accès. permet ledit stockage temporaire d'anodes usées et de croûtes de bain et peut être mise en communication avec lesdits moyens d'aspiration à l'aide de moyens de raccordement, de telle sorte que les produits gazeux émis par les anodes usées et/ou par les croûtes de bain soient récupérés efficacement à l'aide desdits moyens d'aspiration et traités à l'aide desdits moyens de traitement durant la période de refroidissement et de dégazage des anodes usées et/ou des croûtes.

### Description des figures

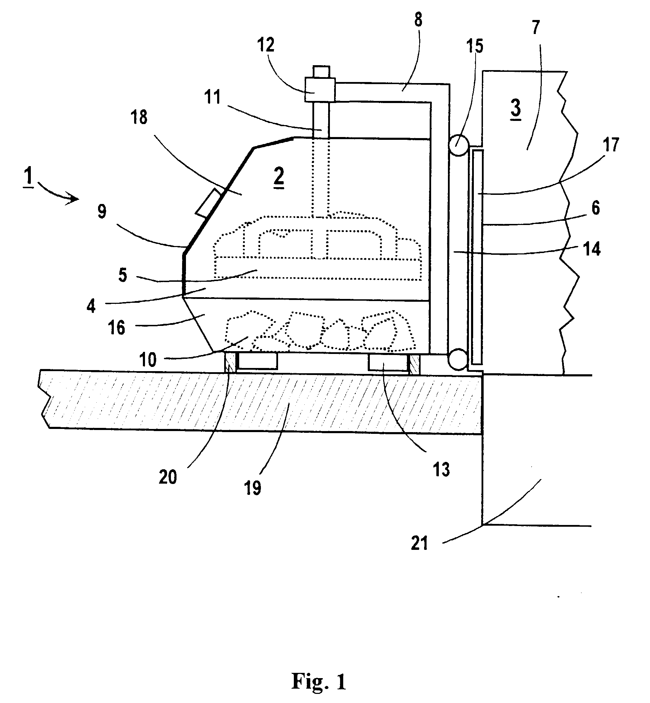

La figure 1 montre, de manière schématique, une réalisation préférée du dispositif de captage (1) selon l'invention, vu de côté, qui comprend un caisson (2) de dégazage et de refroidissement, un dispositif de capotage (3), et des moyens d'aspiration et de traitement des effluents gazeux qui ne sont pas représentés.

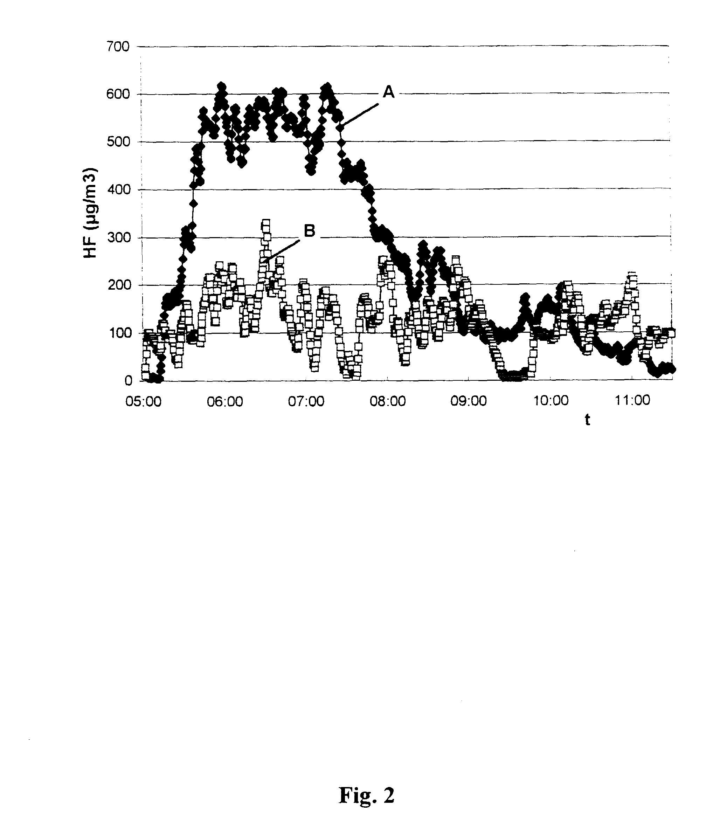

La figure 2 présente un exemple de mesure des rejets fluorés gazeux, dite HF, en fonction du temps, en heures, réalisée lors des essais comparatifs décrits plus bas. La courbe A correspond à des valeurs typiques obtenues lorsque les changements d'anodes sont effectués selon l'art antérieur ; la courbe B correspond à des valeurs mesurées lorsque les changements d'anode sont effectués selon l'invention.

### Description détaillée de l'invention

Dans le mode de réalisation préféré, le procédé de changement d'anode selon l'invention, outre les principales opérations connues de changement d'anodes. qui incluent notamment des opérations de retrait d'anodes usées et de parties de croûtes de bain des cuves d'électrolyse, comprend le stockage temporaire, durant la phase de refroidissement, desdites anodes et/ou croûtes dans le dispositif de captage des effluents propre à une, ou plusieurs, cuve(s) d'électrolyse. de préférence dans une zone particulière dudit dispositif de captage appelée zone de stockage. Il est avantageux de pouvoir isoler ladite zone du reste dudit dispositif de captage pour certaines opérations du procédé.

Les opérations de changement d'anode, notamment les opérations de retrait d'anodes usées et de parties de croûtes, les opérations liées au stockage et le stockage proprement dit sont effectués de manière à récupérer efficacement les produits gazeux émis par lesdites anodes et croûtes. Ainsi, les anodes et/ou les croûtes sont retirées de leur emplacement d'utilisation et transférées dans ladite zone de stockage de manière à éviter l'émission de produits gazeux fluorés hors dudit dispositif. Lorsque le procédé entraîne la sortie des anodes et/ou des croûtes hors du dispositif de captage. telles que le retrait et le transfert dans la zone de stockage dans la plupart des cas, le temps sortie doit être suffisamment court pour ne pas réduire l'efficacité du procédé. De préférence, l'ensemble des opérations qui précèdent le stockage, et qui entraînent la sortie des anodes usées et des croûtes de bain hors du dispositif de captage, est effectué rapidement, soit généralement en moins de 10 minutes, et de préférence encore en moins de 5 minutes.

De manière avantageuse, la durée du stockage temporaire est telle que les anodes et croûtes ne sont finalement retirées du dispositif de captage que lorsqu'elles ont émis la plus grande partie de la quantité totale de produits gazeux émise par lesdites anodes et croûtes lors de la phase de refroidissement. La durée du stockage temporaire, qui dépend de plusieurs facteurs, peut être déterminée soit par des essais, soit à l'aide de capteur, tels que les capteurs de température permettant de déterminer la température des anodes et des croûtes.

Selon une variante avantageuse du procédé de l'invention, le stockage temporaire des anodes usées et des croûtes de bain est réalisé dans une zone annexe du dispositif de captage, dite zone d'aspiration annexe, qui tient lieu de zone de stockage, de manière à réduire au minimum les perturbations de la production de l'aluminium apportées par le procédé de changement d'anodes. De préférence, cette zone annexe peut être isolée à volonté du reste du dispositif de captage de manière notamment à réduire au minimum les fuites de produits gazeux lors de la mise en oeuvre du procédé selon l'invention.

De préférence, les changements d'anode sont effectués successivement sur une série de cuves d'électrolyse, de manière à pouvoir combiner avantageusement les opérations liées au stockage et au refroidissement des anodes usées et des croûtes de bain. Il est avantageux de stocker simultanément des anodes usées et des croûtes de bain dans un même dispositif de captage. Il est également avantageux, lors d'un changement d'anodes sur une cuve donnée, d'effectuer le stockage et le refroidissement des anodes usées dans un dispositif de captage différent de celui de la cuve qui est en cours de changement d'anode, les croûtes de bain retirées lors de l'enlèvement de ces anodes étant stockées soit dans le même dispositif de captage, soit dans un dispositif différent. Dans certains cas, et selon les installations industrielles, il peut être avantageux de stocker plusieurs anodes simultanément dans une même zone de stockage ou d'aspiration annexe.

Selon des variantes de l'invention, la zone de stockage ou d'aspiration annexe peut contenir simultanément plusieurs anodes usées, ou plusieurs couples d'anodes usées, typiquement un, deux ou trois couples d'anodes. Ladite zone peut avantageusement contenir simultanément une ou plusieurs anodes usées et des croûtes de bain. Ces variantes permettent d'augmenter sensiblement l'efficacité des changements d'anodes usées dans les usines d'électrolyse et simplifie l'organisation.

De manière avantageuse, ladite zone de stockage du dispositif de captage selon l'invention se situe à une extrémité dudit dispositif de captage. De préférence. ladite zone de stockage constitue une zone d'aspiration annexe audit dispositif de captage qui peut être isolée des moyens d'aspiration du dispositif de captage. Ladite zone de stockage comprend avantageusement un ou plusieurs supports d'anode permettant de fixer les anodes pendant la période de stockage.

Selon un mode de réalisation avantageux du dispositif de captage des effluents gazeux selon l'invention, ladite zone d'aspiration annexe comprend un caisson de dégazage et de refroidissement. situé de préférence à l'une de des extrémités dudit dispositif de capotage, qui peut être mis en communication avec lesdits moyens d'aspiration à l'aide de moyens de raccordement, de telle sorte que les produits gazeux émis par les anodes usées et/ou par les croûtes de bain, soient récupérés efficacement à l'aide desdits moyens d'aspiration et traités à l'aide desdits moyens de traitement durant le stockage temporaire des anodes usées et/ou des croûtes.

Selon des variantes de l'invention, le caisson peut contenir simultanément plusieurs anodes usées, ou plusieurs couples d'anodes usées, typiquement un, deux ou trois couples d'anodes. Le caisson peut avantageusement contenir simultanément une ou plusieurs anodes usées et des croûtes de bain.

Ledit caisson comprend des moyens d'accès, tels qu'un ou plusieurs capots, qui permettent d'y introduire rapidement et aisément une ou plusieurs anodes usées et/ou des croûtes, après leur enlèvement des cuves d'électrolyse. L'étanchéité de ces moyens d'accès peut être comparable à celle des moyens d'accès habituels du dispositif de capotage de manière à ne pas nécessiter de technologie particulière. Il est cependant avantageux que lesdits moyens d'accès permettent d'introduire une ou plusieurs anodes usées et des croûtes dans le même caisson, ce qui permet une optimisation de la mise en oeuvre du procédé selon l'invention. De préférence encore, le caisson comprend un ou plusieurs supports d'anode permettant de fixer les anodes pendant la période de refroidissement et de dégazage.

Les dispositifs de capotage connus comprennent généralement une voie d'accès dite porte de coulée, qui permet notamment d'extraire du métal liquide de la cuve. De préférence, lesdits moyens de raccordement du dispositif de captage selon l'invention incluent un raccordement à ladite porte de coulée.

En référence à la figure 1, qui illustre un mode de réalisation préféré de l'invention, le dispositif de captage (1), vu de côté, comprend un caisson (2) de dégazage et de refroidissement, un dispositif de capotage (3), et des moyens d'aspiration et de traitement des effluents gazeux qui ne sont pas représentés. Le caisson (2) comprend une caisse (4) munie de moyens d'accès, tels que des capots (9), qui peuvent être amovibles ou basculants, et des moyens de raccordement au dispositif de capotage (3), notamment une ouverture (14) sur la partie arrière de la caisse (4).

Le caisson (2) comprend de préférence un ou plusieurs supports d'anode (8) munis de moyens de fixation (12) qui permettent de fixer les anodes usées (5) par leur tige de raccordement électrique (11) une position déterminée pendant la période de refroidissement et de dégazage, ce qui permet notamment un dégazage plus efficace des anodes usées. La, ou les, anodes sont avantageusement positionnées de manière à pouvoir placer en même temps dans le caisson (2) des croûtes de bain (10) et des anodes usées (5), les croûtes (10) étant de préférence déposées dans une benne (16) située au fond de la caisse (4).

Les supports d'anodes (8), ainsi que les moyens de fixation (12), doivent être adaptés au système anodique de la cuve, qui est variable d'une usine à l'autre. Selon les cas, ils peuvent permettre de supporter et de fixer, par exemple, une ou plusieurs anodes munies d'une seule tige chacune, ou une ou plusieurs paires d'anodes munies d'une seule tige chacune, ou encore une ou plusieurs paires d'anodes munies d'une seule tige par paire d'anodes.

Le caisson (2) est de préférence accolé à l'extrémité du dispositif de capotage (3) où se situe une voie d'accès dite porte de coulée (6). Les moyens de raccordement incluent de préférence un raccordement à la porte de coulée (6) du dispositif de captage des effluents. Des joints d'étanchéité (15) sont avantageusement ajoutés au droit de la jonction entre le caisson (2) et la porte de coulée (6), de manière à assurer l'étanchéité de la jonction entre l'ouverture arrière (14) du caisson et la porte de coulée (6) et à réduire la perte de charge du dispositif d'aspiration. La porte de coulée (6) permet de mettre en communication le volume intérieur (18) du caisson et la zone d'aspiration (7) du dispositif de capotage (3) par l'ouverture du (ou des) volet(s) (17) de la porte de coulée (6).

Les moyens de raccordement comprennent éventuellement un tube d'aspiration, flexible ou rigide, qui permette un pompage d'appoint sur le caisson, notamment avant ouverture de la porte de coulée ou des déplacements du caisson.

Les moyens de raccordement sont dimensionnés de manière à permettre une aspiration satisfaisante à l'intérieur du caisson. Lesdits moyens d'aspiration et de raccordement avec le caisson permettent de préférence un débit d'aspiration suffisant pour maintenir une dépression satisfaisante entre l'atmosphère ambiante et l'intérieur du caisson, à savoir environ 250 Pa.

Le caisson (2) est avantageusement amovible et transportable de manière à permettre notamment le transport aisé des anodes usées et/ou des croûtes à la fin de la période de refroidissement et de dégazage. Le caisson (2) comprend aussi avantageusement des moyens de manutention, tels que des guides de fourche (13) permettant le chargement sur des moyens de transport ou des dispositifs de préhension ou d'accrochage (qui ne sont pas illustrés) permettant de soulever, de déplacer et de transporter le caisson, de manière à faciliter la manipulation et le positionnement de celui-ci.

Le caisson comprend aussi de préférence des supports isolés (20) permettant de faire reposer le caisson sur l'allée (19) de circulation des engins tout en assurant une isolation électrique satisfaisante entre le caisson et l'allée, de manière à éviter notamment les risques d'électrocution.

Le caisson est disposé, et éventuellement isolé de la cuve (21), de telle manière que le refroidissement des anodes usées ne soit pas gêné par la chaleur des cuves d'électrolyse.

### Essais comparatifs

Afin de comparer l'invention à l'état de l'art, des essais comparatifs ont été réalisés sur une série de cuves d'électrolyse de 300 kA. Lors de ces essais, une paire d'anodes a été changée successivement sur 30 cuves adjacentes d'une série. La quantité de produits fluorés émise en régime de fonctionnement continu et lors de ces opérations a été déterminée à partir de mesures effectuées à l'aide de détecteurs permanents de l'usine situés au niveau du lanterneau de la salle d'électrolyse.

Dans une première série d'essais, les anodes usées ont été enlevées et remplacées selon les techniques habituelles, et aucune précaution particulière n'a été prise pour limiter l'émission de produits gazeux par les anodes usées et les croûtes de bain retirées de la zone d'aspiration des cuves d'électrolyse.

Dans une deuxième série d'essais, les changements d'anodes ont été réalisés selon l'invention. Pour ces essais, 30 caissons amovibles de 5 m³, dont la structure était similaire à celle du caisson illustré à la figure 1, ont été réalisés en acier. Ces caissons comprenaient notamment deux capots d'accès amovibles et un support d'anode permettant de fixer deux anodes en même temps. La périphérie de la jonction entre le caisson et la porte de coulée était munie d'un joint d'étanchéité tubulaire en caoutchouc renforcé. Les caissons selon l'invention étaient placés à une extrémité des cuves d'électrolyse et le raccordement aux dispositifs de capotage des cuves d'électrolyse était réalisé par ouverture des volets des portes de coulée, les capots étant fermés jusqu'à ce qu'on dépose des anodes et des croûtes dans les caissons.

Dans ces essais, les anodes ont également été enlevées et remplacées selon les procédures habituelles, puis déposées rapidement dans les caissons avec des croûtes de bain. Le temps total de transfert des anodes et des croûtes entre les cuves et les caissons était toujours nettement inférieur à 10 minutes, le plus souvent inférieur à 5 minutes. Les capots ont été ouverts juste avant le stockage des anodes et des croûtes, puis refermés immédiatement après ces opérations et maintenus fermés jusqu'à la fin de la période de refroidissement et de dégazage des anodes usées et des croûtes.

Les mêmes mesures effectuées au cours des essais ont permis d'évaluer la quantité de gaz fluorés qui aurait été rejetée dans l'atmosphère durant l'opération de transfert et, par déduction, celle qui a été récupérée par le dispositif de captage. La quantité totale de produits fluorés rejetée dans l'atmosphère en fonction du temps est illustrée à la figure 2. Ces mesures ont permis d'estimer que l'invention permet de porter le niveau des émissions fluorées, exprimé en termes de valeurs spécifiques, de sa valeur habituelle, soit environ 0,5 kg F / tonne A1, à une valeur nettement plus faible, soit environ 0,3 kg F / tonne A1, c'est-à-dire une réduction globale de 0,2 kg F / tonne A1.

Bien que ces essais aient été réalisés sur des séries de cuves d'électrolyse de 300 kA, l'invention est applicable à des séries de cuves de toutes intensités.

### Avantages

L'invention permet un recyclage du fluor émis dans les moyens de traitement connus des installations de production d'aluminium par électrolyse de l'aluminium, notamment par réaction avec les poudres d'alumine destinées au procédé d'électrolyse.

L'invention est applicable à des installations industrielles de toutes dimensions.

Le dispositif selon l'invention présente l'avantage d'une automatisation aisée de certaines opérations de changement des anodes usées. En particulier, dans le mode de réalisation préféré, l'invention est avantageuse par le fait que le caisson est accolé au dispositif de capotage et, par conséquent, à la portée des moyens de manipulation des anodes propres aux installations industrielles d'électrolyse de l'aluminium connues. Il présente également l'avantage d'une adaptation aisée des dispositifs de captage existants qui ne requiert qu'un investissement limité.

## Revendications

1. Procédé de changement d'anodes usées de cuves de production d'aluminium par électrolyse ignées caractérisé en ce qu'une grande partie, et de préférence la plus grande partie, des produits gazeux émis par les anodes usées et par les croûtes de bain retirées des cuves d'électrolyse est récupérée pendant la phase de refroidissement à l'aide d'un dispositif de captage des effluents propre aux cuves d'électrolyse.

2. Procédé selon la revendication 1, caractérisé en ce qu'il comprend un stockage temporaire, durant la phase de refroidissement, des anodes usées ou des croûtes de bain, ou desdites anodes et croûtes simultanément, dans le dispositif de captage des effluents des cuves d'électrolyse.

3. Procédé selon la revendication 2, caractérisé en ce que ledit stockage temporaire est réalisé dans une zone particulière dudit dispositif de captage, dite zone de stockage.

4. Procédé selon la revendication 3, caractérisé en ce que ladite zone de stockage est isolée du reste dudit dispositif de captage pour certaines opérations dudit procédé.

5. Procédé selon les revendications 3 ou 4, caractérisé en ce que l'ensemble des opérations qui précédent ledit stockage temporaire, et qui entraînent la sortie des anodes usées et des croûtes de bain hors du dispositif de captage, est effectué en moins de 10 minutes.

6. Procédé selon l'une des revendications 2 à 5, caractérisé en ce que les changements d'anode sont effectués successivement sur une série de cuves d'électrolyse, de manière à pouvoir combiner avantageusement les opérations de stockage et de refroidissement des anodes usées et des croûtes de bain.

7. Procédé selon l'une des revendications 2 à 6, caractérisé en ce que, lors d'un changement d'anode sur une cuve donnée, l'on effectue le stockage temporaire dans un dispositif de captage différent de celui de la cuve qui est en cours de changement d'anode.

8. Dispositif de captage des effluents gazeux permettant la mise en oeuvre du procédé selon l'une des revendications 1 à 7, comprenant un dispositif de capotage de cuves de production d'aluminium par électrolyse ignée, des moyens d'aspiration et des moyens de traitement des effluents, et caractérisé en ce qu'il permet le stockage temporaire d'anodes usées et de croûtes de bain, de manière à ce que les produits gazeux émis par les anodes usées et/ou par les croûtes de bain, soient récupérés efficacement à l'aide desdits moyens d'aspiration et traités à l'aide desdits moyens de traitement durant la période de refroidissement et de dégazage des anodes usées et/ou des croûtes.

9. Dispositif de captage selon la revendication 8, caractérisé en ce qu'il comprend une zone de stockage qui comprend des moyens d'accès, qui permet ledit stockage temporaire d'anodes usées et de croûtes de bain et qui peut être mise en communication avec lesdits moyens d'aspiration à l'aide de moyens de raccordement, de telle sorte que les produits gazeux émis par les anodes usées et/ou par les croûtes de bain, soient récupérés efficacement à l'aide desdits moyens d'aspiration et traités à l'aide desdits moyens de traitement durant la période de refroidissement et de dégazage des anodes usées et/ou des croûtes.

10. Dispositif de captage selon la revendication 9, caractérisé en ce que ladite zone de stockage se situe à une extrémité dudit dispositif.

11. Dispositif de captage selon l'une des revendications 9 ou 10, caractérisé en ce ladite zone de stockage constitue une zone d'aspiration annexe qui peut être isolée des moyens d'aspiration du dispositif de captage.

12. Dispositif selon l'une des revendications 9 à 11, caractérisé en ce que ladite zone de stockage comprend un ou plusieurs supports d'anode permettant de fixer les anodes pendant la période de stockage.

13. Dispositif de captage des effluents gazeux selon la revendication 11, caractérisé en ce que ladite zone d'aspiration annexe comprend un caisson de dégazage et de refroidissement, qui comprend des moyens d'accès et qui peut être mis en communication avec lesdits moyens d'aspiration à l'aide de moyens de raccordement.

14. Dispositif selon la revendication 13, caractérisé en ce que ledit caisson est placé à l'une des extrémités dudit dispositif de capotage.

15. Dispositif selon la revendication 13 ou 14, caractérisé en ce que lesdits moyens d'accès permettant d'introduire une ou plusieurs anodes usées et/ou des croûtes dans le même caisson.

16. Dispositif selon l'une des revendications 13 à 15, caractérisé en ce que ledit caisson comprend un ou plusieurs supports d'anode permettant de fixer les anodes pendant la période stockage.

17. Dispositif selon l'une des revendications 13 à 16, caractérisé en ce que ledit dispositif de capotage comprend une porte de coulée et en ce que lesdits moyens de raccordement incluent un raccordement à la porte de coulée.

18. Dispositif selon l'une des revendications 13 à 17, caractérisé en ce que le caisson est amovible et transportable.

19. Dispositif selon l'une des revendications 13 à 18, caractérisé en ce que lesdits moyens de raccordement comprennent un tube d'aspiration flexible ou rigide.

20. Dispositif selon l'une des revendications 13 à 19, caractérisé en ce que ledit caisson comprend des supports isolés permettant de faire reposer le caisson sur l'allée de circulation des engins tout en assurant une isolation électrique satisfaisante entre le caisson et l'allée.

21. Dispositif selon l'une des revendications 13 à 20, caractérisé en ce que ledit caisson est disposé, et éventuellement isolé de la cuve, de telle manière que le refroidissement des anodes usées ne soit pas gêné par la chaleur des cuves d'électrolyse.

22. Dispositif selon l'une des revendications 13 à 21, caractérisé en ce que ledit caisson peut contenir simultanément plusieurs anodes ou couples d'anodes usées.

23. Dispositif selon l'une des revendications 13 à 22, caractérisé en ce que ledit caisson peut contenir simultanément des anodes usées et des croûtes de bain.

24. Dispositif selon l'une des revendications 13 à 23, caractérisé en ce que ledit caisson comprend des moyens de manutention permettant de le déplacer, de le transporter et de le positionner.
